# EUROPÄISCHE PATENTSCHRIFT

(11) **EP 1 084 892 B1**
(45) Veröffentlichungstag und Bekanntmachung des Hinweises auf die Patenterteilung: **23.03.2005**
(21) Anmeldenummer: 00117484.6
(22) Anmeldetag: 12.08.2000
(51) Int. Cl.: B60K 35/00

(54) **Anzeigeinstrument**
Display device
Dispositif afficheur

(30) Priorität: 13.09.1999 DE 19943578
(43) Veröffentlichungstag der Anmeldung: 21.03.2001
(73) Patentinhaber: Siemens Aktiengesellschaft, 80333 München (DE)
(72) Erfinder: Noll, Heinrich, Dr., 64823 Gross-Umstadt (DE)

(56) Entgegenhaltungen:
- WO-A-99/41701
- DE-A- 19 502 542
- DE-A- 19 708 610
- US-A- 5 798 170

## Beschreibung

Die Erfindung betrifft ein für ein Kraftfahrzeug bestimmtes Anzeigeinstrument, welches eine beleuchtbare Anzeige mit einer zwischen zwei Elektroden ansteuerbaren lichtemittierenden Substanz aufweist.

Bei solchen Anzeigeinstrumenten ist es im allgemeinen erforderlich, für die Anzeige Darstellungsflächen vorzusehen, die bei einfachen Ausführungen lediglich mittels eines entsprechend beleuchtbaren Zeichens den momentanen Zustand für den Benutzer visualisieren. Während hierzu früher jeweils separate Glühlampen in Verbindung mit einer entsprechenden Blende eingesetzt wurden, werden heute zunehmend solche Lichtquellen verwendet, die neben einer geringen Bauhöhe und einer hohen Betriebssicherheit insbesondere auch eine flächige Ausleuchtung ermöglichen.

Eine dementsprechende Anzeige ist beispielsweise dadurch realisiert worden, dass eine aus Phosphor bestehende Substanz mittels der beiden Elektroden zur Lichtemission angeregt wird. Durch eine entsprechende Formgebung der Elektroden oder der Phosphorschicht können dabei Zeichen oder Symbole ohne eine zusätzliche Blende abgebildet werden, die dann beispielsweise als helle Fläche vor einem dunklen Hintergrund erscheinen. Bei einer ähnlichen Ausführung ist zudem eine Hintergrundbeleuchtung vorgesehen, so dass die Zeichen oder Symbole durch ihre Kontrastfarbe vor einem beleuchteten Hintergrund sichtbar werden.

Ein derartiges Anzeigelement mit der Merkmalen des Oberbegriffs des Anspruchs 1 ist bekannt aus DE 19708610.

In der Praxis hat sich bei der Anwendung solcher Leuchtmittel als hinderlich erwiesen, dass die üblichen Anzeigeinstrumente gewöhnlich nicht nur solche Anzeigen zur Darstellung einfacher Schaltzustände wie beispielsweise ein/aus aufweisen, sondern darüber hinaus auch andere Darstellungsformen wie Zeigerinstrumente, Leuchtbänder und zunehmend auch Flüssigkristallanzeigen (LCD) umfassen, die jeweils eine speziell darauf abgestimmte Beleuchtungsart erfordern. Beispielsweise benötigen Flüssigkristallanzeigen eine Durchlichtbeleuchtung, bei der das beim Durchtritt veränderte Lichtspektrum zu berücksichtigen ist, während Zifferblätter für Zeigerinstrumente eine gleichmäßige Ausleuchtung der Skalierung und gegebenenfalls auch eine aktive Beleuchtung ihrer Zeigerfahne in einer Kontrastfarbe erfordern. Weiterhin wird aus gestalterischen Überlegungen heraus zunehmend eine dunkle Oberfläche des Anzeigeinstrumentes gewünscht, so dass die Anzeige erst durch entsprechende Beleuchtung für den Betrachter sichtbar wird und dabei eine individuelle und bedarfsgerechte Informationsbereitstellung ermöglicht.

Es sind bereits Versuche unternommen worden, die unterschiedlichen Komponenten zugleich mittels der aktiv leuchtenden Anzeige zu beleuchten, um so den Aufbau zu vereinfachen und zusätzliche Lichtquellen einzusparen. Als nachteilig hat sich dabei in der Praxis erwiesen, dass entweder die Lichtstärke der Anzeige zur Beleuchtung weiterer Anzeigen nicht oder nur in einem bestimmten Farbspektrum ausreichend war oder aber die Formgebungsmöglichkeiten der Anzeigen stark eingeschränkt waren, so dass der Anwendungsbereich erheblich eingeschränkt war. Darüber hinaus ergeben sich an den Grenzflächen benachbarter Anzeigen unerwünschte Lichtveränderungen, die zu einem minderwertigen optischen Erscheinungsbild des Anzeigeinstrumentes führen.

Der Erfindung liegt daher das Problem zugrunde, ein Anzeigeinstrument der eingangs genannten Art so zu gestalten, dass eine einfache Beleuchtung der Anzeige erreicht wird.

Dieses Problem wird erfindungsgemäß dadurch gelöst, dass die Substanz ein lichtemittierendes Polymer (organische LED, Abkürzung: OLED) ist, welches sowohl zur Hintergrundbeleuchtung als auch zur Darstellung von Bildpunkten oder Zeichen ansteuerbar ausgeführt ist.

Hierdurch kann bei dem Anzeigeinstrument das Polymer als einheitliche Lichtquelle für Anzeigen mit beliebigen Darstellungsformen verwendet werden. Die mit dem Polymer erzielbare hohe Lichtstärke ermöglicht dabei auch eine problemlose Durchlichtbeleuchtung von Flüssigkristallanzeigen. Weiterhin kann dabei eine sogenannte Black-Panel-Darstellung realisiert werden, bei der die Darstellungsebene der Anzeige ausschließlich bei eingeschalteter Beleuchtung sichtbar wird, die Vorderseite des Anzeigeinstrumentes bei nicht eingeschalteter Beleuchtung hingegen als eine im wesentlichen dunkle Oberfläche erscheint. Zugleich weist das Polymer eine vergleichsweise geringe Bauhöhe auf, so dass insbesondere auch sehr flache Ausführungsformen des Anzeigeinstrumentes mit einem erweiterten Einsatzbereich erreicht werden. Das Polymer kann dabei sowohl zur Beleuchtung weiterer Anzeigen als auch durch eine eigene Formgebung beispielsweise in Form eines Symbols oder einer Ziffer unmittelbar selbst der Darstellung dienen, indem die durch die Ziffer oder das Symbol bestimmte Fläche bei entsprechender Ansteuerung hell gegenüber dem Hintergrund hervortritt. Das auch als LEP (Light Emitting Polymer) oder OLED (Organic Light Emitting Diode, s.o.) bezeichnete Polymer weist weiterhin einen geringen Energieverbrauch auf und ermöglicht durch seinen erweiterten Betrachtungswinkel eine vereinfachte Ablesbarkeit. Dabei kann das gesamte Lichtspektrum abgebildet werden, so dass insbesondere Lichtfilter entfallen können. Ferner ermöglicht die hohe Reaktionsgeschwindigkeit eine schnell wechselnde Bildfolge, so dass insbesondere auch sicherheitsrelevante Informationen mittels des Polymeres zuverlässig dargestellt werden können.

Eine besonders vorteilhafte Ausführungsform der Erfindung ist dadurch gegeben, dass die Elektroden aus einem Kunststoff hergestellt sind. Hierdurch kann der schichtartige Aufbau des Anzeigeinstrumentes in seiner Bauhöhe weiter reduziert werden, indem die Elektroden beispielsweise als Folie ausgeführt sind. Zugleich kann dabei das Gewicht des Anzeigeinstrumentes reduziert werden, so dass sich ein wesentlich erweiterter Einsatzbereich ergibt.

Eine hohe mechanische Stabilität bei geringer Bauhöhe weist das erfindungsgemäße Anzeigeinstrument vorteilhaft auch dann auf, wenn die Elektroden auf jeweils einem Träger aus Kunststoff oder Glas aufgebracht sind.

Dabei ist eine besonders günstige Weiterbildung der Erfindung dadurch gegeben, dass die Elektroden und das zwischen ihnen eingeschlossene Polymer formbar sind. Hierdurch kann ein Anzeigeinstrument realisiert werden, welches der Oberflächenbeschaffenheit der Armaturentafel des Kraftfahrzeuges optimal angepasst werden kann. Neben dem damit verbundenen ansprechenden optischen Erscheinungsbild wird durch eine dem Sehvermögen und den äußeren Einflüssen im Innenraum des Kraftfahrzeuges angepasste Formgebung des Anzeigeinstrumentes zugleich auch eine verbesserte Ablesbarkeit und dadurch eine erhöhte Sicherheit erreicht. Beispielsweise lassen sich so störende Reflexionen an der Vorderseite des Anzeigeinstrumentes in einfacher Weise vermeiden.

Das Anzeigeinstrument kann ausschließlich mit solchen Anzeigen ausgestattet sein, die dem Benutzer lediglich durch ihre Ansteuerung als beleuchteter oder nicht beleuchteter Bereich die gewünschten Informationen visualisieren. Eine andere besonders vorteilhafte Ausführungsform der Erfindung ist hingegen dadurch erreicht, dass das Anzeigeinstrument ein Zeigerinstrument aufweist. Hierdurch können Informationen in konventioneller Weise dargestellt und auch durch einen flüchtigen Blick des Benutzers erfasst werden. Dabei ermöglicht das Polymer eine flächige Beleuchtung des Hintergrundes, wobei das Zeigerinstrument auch derart in das Anzeigeinstrument integriert werden kann, dass es ausschließlich bei eingeschalteter Beleuchtung gegenüber dem Hintergrund hervortritt und dadurch ablesbar wird. Zusätzlich kann auch der Zeiger des Zeigerinstrumentes - z. B. mittels auf seiner Fahne aufgebrachter OLED - aktiv beleuchtbar sein.

Hierzu ist eine Ausgestaltung des erfindungsgemäßen Anzeigeinstrumentes besonders gut geeignet, bei der das Polymer eine Durchbrechung für eine zur Auslenkung einer Zeigerfahne des Zeigerinstrumentes bestimmte Zeigerwelle hat. Hierdurch kann die Zeigerfahne mit geringem Abstand vor dem Polymer schwenkbar angeordnet werden, so dass sich ein scharfer Kontrast zwischen der Zeigerfahne und dem Hintergrund und damit eine verbesserte Ablesbarkeit ergibt. Zugleich ist dabei die nicht beleuchtbare Fläche auf die Durchbrechung für die Zeigerfahne beschränkt, so dass sich eine gleichmäßig Beleuchtung mit einer vergleichsweise hohen Leuchtdichte realisieren lässt.

Eine andere besonders vorteilhafte Ausführungsform der Erfindung ist dann gegeben, wenn die rückwärtige Elektrode zugleich als Träger für den Antrieb (z. B. Meßwerk, Schrittmotor) des Zeigerinstruments ausgeführt ist. Hierdurch wird die Anzahl der erforderlichen Bauelemente des Anzeigeinstrumentes reduziert, so dass sich neben einem geringeren Herstellungsaufwand auch verringerte Abmessungen realisieren lassen. Die rückwärtige Elektrode ist hierbei beispielsweise aus einem entsprechend verstärkten Kunststoffmaterial hergestellt und kann zusätzliche Fixiermittel aufweisen. Beispielsweise kann die rückwärtige Elektrode dazu auch als starre Leiterplatte oder partiell verstärkte Flex-Leiterplatte ausgebildet sein.

Es ist vorstellbar, in dem erfindungsgemäßen Anzeigeinstrument eine Anzeige (z. B. LCD) mit ansteuerbaren Segmenten vorzusehen, welche Anzeige von dem lichtemittierenden Polymer flächig beleuchtet wird. Von besonderem Vorteil ist es hingegen, wenn das lichtemittierende Polymer in zumindest einem Teilbereich eine Anzeige mit ansteuerbaren Anzeigesegmenten und/oder mit einer ansteuerbaren Punktmatrix aufweist, so daß die Bauteilanzahl des Anzeigeinstrumentes verringernd und dessen Bauhöhe vermindernd das lichtemittierende Polymer selbst als Anzeige fungiert.

Eine günstige Ausführungsform der Erfindung ist auch dadurch gegeben, dass die Anzeige eine Segmentierung zur wahlweisen Ansteuerung einzelner Segmente der Anzeige hat. Hierdurch kann aus einzelnen, entsprechend anzusteuernden Punkten oder Bereichen ähnlich einer Flüssigkristallanzeige eine Darstellung alphanumerischer Zeichen oder einer Punktmatrix erfolgen. Die hierdurch erzielte individuell wählbare Darstellungsform ermöglicht neben einem Einsatz des Anzeigeinstrumentes für unterschiedliche Verwendungszwecke auch eine flexible Auswahl der Darstellungsform durch den Benutzer. So können beispielsweise die darzustellenden Informationen in der Rangfolge ihrer Relevanz angeordnet und in der Größe der Darstellung variabel ausgeführt werden. Auch eine Anordnung in Form mehrerer, in verschiedenen Ebenen angeordneter "Fenster", deren Anordnung beispielsweise auch durch den Benutzer bestimmt werden kann, ist dabei problemlos möglich.

Das erfindungsgemäße Anzeigeinstrument könnte eine monochrome Beleuchtung und/oder Anzeigen in gleicher Farbe aufweisen. Nach einer anderen Weiterbildung der Erfindung ist es jedoch von besonderem Vorteil, wenn in Abhängigkeit von der Wahl des Polymerwerkstoffs für das lichtemittierende Polymer und/oder von der Ansteuerspannung des lichtemittierenden Polymers das gesamte Spektrum sichtbaren Lichts wahlweise von dem lichtemittierenden Polymer abstrahlbar ist. Damit ist für eine klarere Informationsdarstellung die Farbe umschaltbar und/oder eine Farbdarstellung ermöglicht.

Gemäß einer anderen vorteilhaften Weiterbildung der Erfindung erreicht die Leuchtdichte des von dem lichtemittierenden Polymer abstrahlbaren Lichtes einen Wert über 1000 cd/m². Auf diese Weise ist das Anzeigeinstrument auch bei großer Umgebungshelligkeit, wie sie bspw. bei direkt auf das Instrument strahlendem Sonnenlicht vorliegt, die Verkehrssicherheit erhöhend gut ablesbar. Andererseits ist es denkbar, bei geringer Helligkeit (z. B. nächtliche Dunkelheit) die Leuchtdichte durch Dimmung auf Werte unter 1000 cd/m² zu vermindern, so daß ein Fahrzeugführer nicht von dem Instrument geblendet wird.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in einer skizzenhaften Darstellung in
- Fig. 1: eine Draufsicht auf ein erfindungsgemäßes Anzeigeinstrument,
- Fig. 2: das in Figur 1 gezeigte Anzeigeinstrument in einer geschnittenen Seitenansicht,
- Fig. 3: ein mit verschiedenen Zeigerinstrumenten ausgestattetes Anzeigeinstrument,
- Fig. 4: das in Figur 3 gezeigte Anzeigeinstrument in einer geschnittenen Seitenansicht.

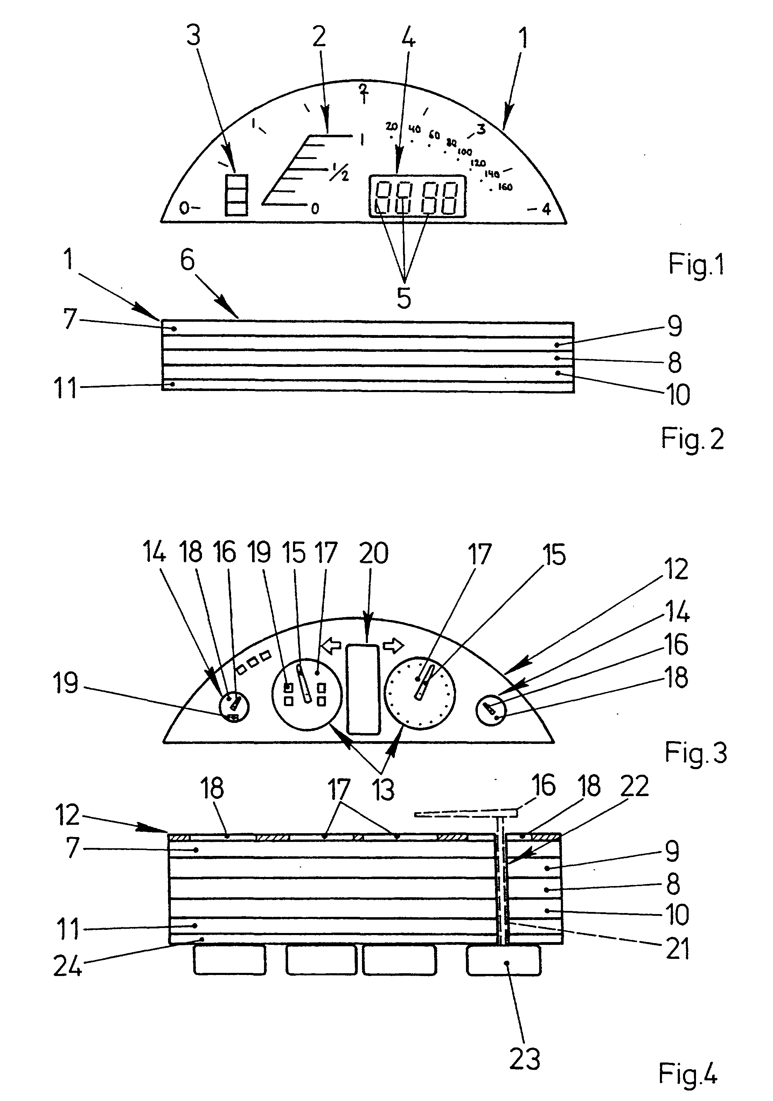

Figur 1 zeigt in einer Draufsicht ein Anzeigeinstrument 1 eines Kraftfahrzeuges. Das Anzeigeinstrument 1 ist mit unterschiedlichen Anzeigen 2, 3, die beispielsweise zur Darstellung des Tankinhaltes, der Kühlflüssigkeitstemperatur oder der momentanen Geschwindigkeit des Kraftfahrzeuges dienen, ausgestattet. Weiterhin hat das Anzeigeinstrument 1 eine Anzeige 4, bei der einzelne Segmente 5 unabhängig ansteuerbar sind und so eine beliebige Darstellung von alphanumerischen Zeichen oder Symbolen ermöglicht.

Den Aufbau des Anzeigeinstrumentes 1 zeigt die Figur 2 in einer geschnittenen Seitenansicht. Zu erkennen sind die einzelnen Ebenen, wobei an einer Vorderseite 6 des Anzeigeinstrumentes 1 eine im wesentlichen transparente Abdeckung 7 vorgesehen ist. Ein lichtemittierendes Polymer 8 ist zwischen einer transparenten vorderen Elektrode 9 und einer rückwärtigen Elektrode 10 eingeschlossen. Eine entsprechende Ansteuerung der Elektroden 9, 10 führt zu einer Ladungsbewegung der polarisierten Elektroden 9, 10, wobei aufeinander treffende Ladungen ihre Energie in Form einer Lichtemission abgeben. Eine rückwärtige Abdeckung 11 ist zugleich als ein Gehäuseelement des Anzeigeinstrumentes 1 ausgeführt.

Eine demgegenüber abgewandelte Ausführung eines Anzeigeinstrumentes 12 zeigt Figur 3 in einer Draufsicht. Im Vergleich zu dem in Figur 1 dargestellten Anzeigeinstrument 1 ist das Anzeigeinstrument 12 zusätzlich mit verschiedenen Zeigerinstrumenten 13, 14 ausgestattet, die eine konventionelle, analoge Darstellung ermöglichen. Die Zeigerinstrumente 13, 14 weisen hierzu jeweils eine Zeigerfahne 15, 16 auf, die jeweils vor einem durch ein nicht dargestelltes Polymer beleuchtbaren Zifferblatt 17, 18 schwenkbar angeordnet sind. Die Zifferblätter 17, 18 sind jeweils ihrerseits mit verschiedenen, durch einzeln ansteuerbare Bereiche gebildete Anzeigen 19 ausgestattet, so dass insbesondere eine Informationsdarstellung in Abhängigkeit von der Auslenkung der Zeigerfahne 15, 16 erreicht wird.

Zusätzlich weist das Anzeigeinstrument 12 eine als Punktmatrixdisplay ausgeführte Anzeige 20 auf, die ähnlich einer Flüssigkristallanzeige eine beliebige Darstellungsform, beispielsweise auch bewegte Bilder, ermöglicht.

Der Aufbau des Anzeigeinstrumentes 12 ist anhand der Figur 4 weiter dargestellt, die das Anzeigeinstrument 12 in einer geschnittenen Seitenansicht zeigt. Zusätzlich zu den übereinstimmenden und in Figur 2 gezeigten Abdeckungen 7, 11 und dem zwischen den beiden Elektroden 9, 10 eingeschlossenen Polymer 8 sind vorderseitig an dem Anzeigeinstrument 12 die Zifferblätter 17, 18 angeordnet, wobei exemplarisch die vor dem Zifferblatt 18 um eine Zeigerwelle 21 schwenkbare Zeigerfahne 16 gestrichelt dargestellt ist. Hierzu ist eine Durchbrechung 22 zur beweglichen Aufnahme der Zeigerwelle 21 vorgesehen, wobei ein die Zeigerfahne 16 auslenkendes Messwerk 23 rückseitig an einer Leiterplatte 24 des Anzeigeinstrumentes 12 fixiert ist.

Die Anzeigeinstrumente 1, 12 sind dabei nicht auf die Verwendung als Kombinationsinstrument im Bereich einer Armaturentafel des Kraftfahrzeuges beschränkt. Insbesondere die flexible Darstellungsform sowie die freie Formbarkeit, wobei auch mehrfach gewölbte Oberflächen problemlos realisierbar sind, lassen einen weiten Einsatzbereich zu. So können einfache Anzeigeinstrumente beispielsweise im Zusammenhang mit elektrischen Einstellelementen oder Auswahlschaltern zur Funktionskontrolle eingesetzt werden.

## Patentansprüche

1. Für ein Kraftfahrzeug bestimmtes Anzeigeinstrument (1), welches eine beleuchtbare Anzeige mit einer zwischen zwei Elektroden (9, 10) ansteuerbaren lichtemittierenden Substanz aufweist wobei die Substanz ein lichtemittierendes Polymer (8) ist, **dadurch gekennzeichnet, dass** es sowohl zur Hintergrundbeleuchtung als auch zur Darstellung von Bildpunkten oder Zeichen ansteuerbar ausgeführt ist.

2. Anzeigeinstrument nach Anspruch 1, **dadurch gekennzeichnet, dass** die Elektroden (9, 10) aus einem Kunststoff hergestellt sind.

3. Anzeigeinstrument nach Anspruch 1 oder 2, **dadurch gekennzeichnet, dass** die Elektroden (9, 10) auf jeweils einem Träger (7, 11) aus Kunststoff oder Glas aufgebracht sind.

4. Anzeigeinstrument nach einem der vorhergehenden Ansprüche, **dadurch gekennzeichnet, dass** die Elektroden (9, 10) und das zwischen ihnen eingeschlossene Polymer (8) formbar sind.

5. Anzeigeinstrument nach einem der vorhergehenden Ansprüche, **dadurch gekennzeichnet, dass** das Anzeigeinstrument (12) ein Zeigerinstrument (13, 14) aufweist.

6. Anzeigeinstrument nach Anspruch 5, **dadurch gekennzeichnet, dass** das Polymer (8) eine Durchbrechung (22) für eine zur Auslenkung einer Zeigerfahne (16) des Zeigerinstrumentes (14) bestimmte Zeigerwelle (21) hat.

7. Anzeigeinstrument nach einem der vorhergehenden Ansprüche, **dadurch gekennzeichnet, dass** die rückwärtige Elektrode (10) zugleich als Träger für den Antrieb des Zeigerinstruments (13, 14) ausgeführt ist.

8. Anzeigeinstrument nach einem der vorhergehenden Ansprüche, **dadurch gekennzeichnet, dass** das lichtemittierende Polymer (8) in zumindest einem Teilbereich eine Anzeige (4, 20) mit ansteuerbaren Anzeigesegmenten (5) und/oder mit einer ansteuerbaren Punktmatrix aufweist.

9. Anzeigeinstrument nach einem der vorhergehenden Ansprüche, **dadurch gekennzeichnet, dass** die Anzeige (4) eine Segmentierung zur wahlweisen Ansteuerung einzelner Segmente (5) der Anzeige (4) aufweist.

10. Anzeigeinstrument nach einem der vorhergehenden Ansprüche, **dadurch gekennzeichnet, dass** in Abhängigkeit von der Wahl des Polymerwerkstoffs für das lichtemittierende Polymer (8) und/oder von der Ansteuerspannung des lichtemittierenden Polymers (8) das gesamte Spektrum sichtbaren Lichts wahlweise von dem lichtemittierenden Polymer (8) abstrahlbar ist.

11. Anzeigeinstrument nach einem der vorhergehenden Ansprüche, **dadurch gekennzeichnet, dass** die Leuchtdichte des von dem lichtemittierenden Polymer (8) abstrahlbaren Lichts einen Wert über 1000 cd/m² erreicht.

## Claims

1. Indicating instrument (1) which is intended for a motor vehicle and has an illuminable display with a light-emitting substance which can be activated between two electrodes (9, 10), the substance being a light-emitting polymer (8), **characterized in that** it is designed such that it can be activated both for the background illumination and for the representation of image dots or characters.

2. Indicating instrument according to Claim 1, **characterized in that** the electrodes (9, 10) are produced from a plastic.

3. Indicating instrument according to Claim 1 or 2, **characterized in that** the electrodes (9, 10) are each applied to a substrate (7, 11) of plastic or glass.

4. Indicating instrument according to one of the preceding claims, **characterized in that** the electrodes (9, 10) and the polymer (8) enclosed between them are capable of being shaped.

5. Indicating instrument according to one of the preceding claims, **characterized in that** the indicating instrument (12) has a pointer instrument (13, 14).

6. Indicating instrument according to Claim 5, **characterized in that** the polymer (8) has an opening (22) for a pointer spindle (21) intended for the deflection of a pointer vane (16) of the pointer instrument (14).

7. Indicating instrument according to one of the preceding claims, **characterized in that** the rear electrode (10) is designed at the same time as a carrier for the drive of the pointer instrument (13, 14).

8. Indicating instrument according to one of the preceding claims, **characterized in that** the light-emitting polymer (8) has in at least a subregion a display (4, 20) with activatable display segments (5) and/or with an activatable dot matrix.

9. Indicating instrument according to one of the preceding claims, **characterized in that** the display (4) has a segmentation for the optional activation of individual segments (5) of the display (4).

10. Indicating instrument according to one of the preceding claims, **characterized in that**, dependent on the choice of polymer material for the light-emitting polymer (8) and/or on the activation voltage of the light-emitting polymer (8), the entire spectrum of visible light can be optionally emitted by the light-emitting polymer (8).

11. Indicating instrument according to one of the preceding claims, **characterized in that** the luminous density of the light which can be emitted by the light-emitting polymer (8) reaches a value above 1000 cd/m².

## Revendications

1. Dispositif afficheur (1) destiné à un véhicule automobile, comportant un affichage pouvant être éclairé par une substance électroluminescente pouvant être excitée entre deux électrodes (9, 10), où la substance est un polymère (8) électroluminescent, **caractérisé par le fait qu'**il peut être réalisé pour être excité non seulement pour un éclairage d'arrière-plan, mais aussi pour représenter des points d'image ou des signes.

2. Dispositif afficheur selon la revendication 1 **caractérisé par le fait que** les électrodes (9, 10) sont fabriquées en matière plastique.

3. Dispositif afficheur selon la revendication 1 ou 2 **caractérisé par le fait que** les électrodes (9, 10) sont montées chacune sur un support (7, 11) en matière plastique ou en verre.

4. Dispositif afficheur selon l'une des revendications précédentes **caractérisé par le fait que** les électrodes (9, 10) et le polymère (8) inclus entre ces dernières peuvent être façonnés.

5. Dispositif afficheur selon l'une des revendications précédentes **caractérisé par le fait que** le dispositif afficheur (12) comporte un instrument à aiguille (13, 14).

6. Dispositif afficheur selon la revendication 5 **caractérisé par le fait que** le polymère (8) a une ouverture (22) permettant de faire passer un arbre d'aiguille (21) destiné à faire dévier une palette (16) d'aiguille de l'instrument à aiguille (14).

7. Dispositif afficheur selon l'une des revendications précédentes **caractérisé par le fait que** l'électrode arrière (10) sert en même temps de support pour l'entraînement de l'instrument à aiguille (13, 14).

8. Dispositif afficheur selon l'une des revendications précédentes **caractérisé par le fait que** le polymère (8) électroluminescent comporte, au moins dans une zone partielle, un affichage (4, 20) avec des segments d'affichage (5) pouvant être excités et/ou une matrice à points pouvant être excitée.

9. Dispositif afficheur selon l'une des revendications précédentes **caractérisé par le fait que** l'affichage (4) comporte une segmentation permettant d'exciter au choix des segments séparés (5) de l'affichage (4).

10. Dispositif afficheur selon l'une des revendications précédentes **caractérisé par le fait que**, en fonction du choix de la matière du polymère électroluminescent (8) et/ou de la tension d'excitation du polymère électroluminescent (8), l'ensemble du spectre de la lumière visible peut être émis au choix par le polymère électroluminescent (8).

11. Dispositif afficheur selon l'une des revendications précédentes **caractérisé par le fait que** la luminance de la lumière pouvant être émise par le polymère électroluminescent (8) atteint une valeur supérieure à 1000 cd/m².
